# EUROPEAN PATENT APPLICATION

(11) **EP 4 783 435 A1**
(43) Date of publication of application: **29.07.2026**
(21) Application number: 24923289.3
(22) Date of filing: 03.09.2024
(51) Int. Cl.: H02M 1/00, H04W 52/00

(54) **POWER SUPPLY CIRCUIT, WIRELESS COMMUNICATION SYSTEM AND CHIP**

(30) Priority: 05.02.2024 CN 202410168666
(71) Applicant: HUAWEI TECHNOLOGIES CO., LTD., Shenzhen 518129 (CN)
(72) Inventor: WU, Jianfeng, Shenzhen, Guangdong 518129 (CN); LIU, Chang, Shenzhen, Guangdong 518129 (CN); QIN, Zhongming, Shenzhen, Guangdong 518129 (CN); HAN, Zhifang, Shenzhen, Guangdong 518129 (CN)
(74) Representative: Gill Jennings & Every LLP
(86) International application number: PCT/CN2024/116557
(87) International publication number: WO 2025/167079

(57) **Abstract**

A power supply circuit, a wireless communication system, and a chip are provided, and relate to the field of communication device technologies, so that a plurality of power supply voltages can be provided for a radio frequency PA. The power supply circuit includes a switch amplification circuit, a linear amplification circuit, a control circuit, and an inductor. The control circuit includes a mode detection circuit, a mode selection circuit, and a hysteresis comparison circuit. The mode detection circuit is coupled to a first end of the inductor, the mode selection circuit is coupled to the switch amplification circuit, the hysteresis comparison circuit is coupled to the first end of the inductor and a second end of the inductor, and the mode detection circuit and the hysteresis comparison circuit are further coupled to the mode selection circuit.

## Description

This application claims priority to Chinese Patent Application No. 202410168666.1, filed with the China National Intellectual Property Administration on February 5, 2024 and entitled "POWER SUPPLY CIRCUIT, WIRELESS COMMUNICATION SYSTEM, AND CHIP", which is incorporated herein by reference in its entirety.

### TECHNICAL FIELD

This application relates to the field of communication device technologies, and in particular, to a power supply circuit, a wireless communication system, and a chip.

### BACKGROUND

As a mobile wireless communication technology gradually transits from a conventional voice communication-centric era to a 4th generation mobile communication technology (4th generation mobile communication technology, 4G) era of mobile broadband and a 5G era of a networked society, electronic devices having a mobile communication function or a wireless communication function have become increasingly common, providing wireless communication services for users. There is a growing demand from the users for application of the mobile wireless communication technology, along with increasing requirements for higher communication rates, and the users require that they can access wireless communication networks anytime and anywhere. These requirements fuel booming development of the mobile wireless communication technology. In this case, the electronic devices need to support various communication modes and standards, from 4G long term evolution (long term evolution, LTE) to 5G new radio (new radio, NR), from early wireless fidelity (wireless fidelity, Wi-Fi) to current Wi-Fi 6, and the like, and communication bandwidth increasingly widens: from 4G LTE with bandwidth of 1.4 MHz to 5G NR with bandwidth of 100 MHz or even 200 MHz. In addition, in a broadband Wi-Fi and millimeter-wave communication system, signal bandwidth is wider. In these electronic devices, it is a common behavior to perform corresponding processing on radio frequency (radio frequency, RF) signals. For example, before the radio frequency signals are sent, a transmitter needs to use a radio frequency power amplifier (radio frequency power amplifier, RFPA, which is a PA for short) to increase output power of the radio frequency signals (for example, maintain sufficient energy per bit).

As a quantity of frequency bands increases and more advanced wireless communication features, for example, uplink carrier aggregation (carrier aggregation, CA) and uplink multiple-input multiple-output (multiple-input multiple-output, MIMO), are supported, several uplink transmitters are required to work at the same time. In addition, to improve coverage of a cellular system and compensate for a loss between an output of the PA to an antenna, output power of the RFPA is required to become larger. Therefore, a transmitter of a current electronic device is a transmitter system in which a plurality of wireless communication systems coexist, for example, Wi-Fi, cellular, and satellite communication. When the RFPA is used in different wireless communication systems, actual power is different. To reduce power consumption, a plurality of power supply voltages need to be provided for the RFPA.

### SUMMARY

Embodiments of this application provide a power supply circuit, a wireless communication system, and a chip, so that a plurality of power supply voltages can be provided for a PA.

To achieve the foregoing objective, this application uses the following technical solutions.

According to a first aspect, a power supply circuit is provided. The power supply circuit includes a switch amplification circuit, a linear amplification circuit, a control circuit, and an inductor. In terms of a structure, the control circuit is coupled to the switch amplification circuit, the linear amplification circuit is coupled to a first end of the inductor, the switch amplification circuit is coupled to a second end of the inductor, the first end of the inductor is configured to be coupled to a power amplifier, and the linear amplification circuit is further configured to be coupled to a processing circuit. The control circuit includes a mode detection circuit, a mode selection circuit, and a hysteresis comparison circuit. The mode detection circuit is coupled to the first end of the inductor, the mode selection circuit is coupled to the switch amplification circuit, the hysteresis comparison circuit is coupled to the first end of the inductor and the second end of the inductor, and the mode detection circuit and the hysteresis comparison circuit are further coupled to the mode selection circuit. In terms of a function, the linear amplification circuit is configured to output a first power supply signal based on a first envelope signal output by the processing circuit. Usually, the first envelope signal may be an envelope signal of a sending signal of the processing circuit. The hysteresis comparison circuit is configured to output a first control signal to the mode selection circuit in response to voltages at the first end and the second end of the inductor. The mode detection circuit is configured to output a mode selection signal to the mode selection circuit in response to the voltage at the first end of the inductor. The mode selection circuit is configured to output a plurality of switch control signals to the switch amplification circuit in response to the mode selection signal and the first control signal. The switch amplification circuit is configured to output, by the switch amplification circuit, a first power supply voltage or a second power supply voltage in a first mode in response to the plurality of switch control signals, where the second power supply voltage is greater than the first power supply voltage. The switch amplification circuit is further configured to output, by the switch amplification circuit, the first power supply voltage or a third power supply voltage in a second mode in response to the plurality of switch control signals, where the third power supply voltage is greater than the second power supply voltage. The switch amplification circuit is configured to output, by the switch amplification circuit, the second power supply voltage or the third power supply voltage in a third mode in response to the plurality of switch control signals. According to the foregoing solution, the mode detection circuit may generate the mode selection signal based on the voltage at the first end of the inductor, namely, a voltage output by the power supply circuit to the power amplifier. When the mode selection signal separately enables different modes (where for example, the first mode is a buck buck mode, the second mode is a buck-boost buck-boost mode, and the third mode is a boost boost mode), the mode selection circuit may generate a switch control signal for each switch in the switch amplification circuit SA based on a corresponding mode selection signal and a first control signal having a duty cycle, and the switch amplification circuit SA may generate two different power supply voltages in response to the plurality of switch control signals in each mode. In this way, the switch amplification circuit SA may generate a plurality of different output voltages in a plurality of modes; and finally, a voltage Vsw output by the switch amplification circuit SA is filtered by the inductor L1, converted from a rectangular wave to a triangular wave, and supplies power to the PA together with the first power supply signal output by the LA, so that a plurality of power supply voltages are provided for the PA. In comparison with directly using a power source voltage to supply power to the PA or using two conventional voltages to supply power, the power supply circuit provided in this embodiment of this application can provide a plurality of power supply voltages, so that actual power of a wireless communication system in different frequency bands can be better adapted, thereby reducing power consumption.

In a possible implementation, the power supply circuit further includes: a coupling capacitor, where the coupling capacitor is coupled between the linear amplification circuit and the first end of the inductor. The hysteresis comparison circuit is further coupled to the linear amplification circuit and the processing circuit. The hysteresis comparison circuit is further configured to receive a bias voltage, where the bias voltage represents a difference between voltages at two ends of the coupling capacitor. The hysteresis comparison circuit is specifically configured to output the first control signal to the mode selection circuit in response to the voltages at the first end and the second end of the inductor, the first power supply signal, and the bias voltage. In the foregoing solution, the switch amplification circuit SA and the linear amplification circuit LA are directly coupled through the inductor L1, and this architecture is usually referred to as a direct current (direct current, DC) coupling architecture in the industry. To ensure optimal ETM performance (which includes high bandwidth and power efficiency), an alternating current (alternating current AC) coupling architecture is crucial. In comparison with a DC coupling architecture, an AC coupling architecture can reduce a power supply voltage required by a linear amplification circuit LA, reduce a power supply requirement of the linear amplification circuit, and improve total ETM bandwidth and total ETM efficiency. Therefore, most advanced and practical ETMs are based on the alternating current coupling architecture. To implement the power supply circuit by using the alternating current coupling architecture, one coupling capacitor Cac may be introduced between the linear amplification circuit LA and the switch amplification circuit SA.

In a possible implementation, an output voltage at the first end of the inductor in the first mode is within a first voltage range, an output voltage at the first end of the inductor in the second mode is within a second voltage range, and an output voltage at the first end of the inductor in the third mode is within a third voltage range. The first voltage range overlaps the second voltage range, a maximum voltage of the first voltage range is within the second voltage range, and a minimum voltage of the second voltage range is within the first voltage range. The second voltage range overlaps the third voltage range, a maximum voltage of the second voltage range is within the third voltage range, and a minimum voltage of the third voltage range is within the second voltage range. In this way, the voltage range of the first end of the inductor in the first mode significantly overlaps the voltage range of the inductor in the second mode, and the voltage range of the inductor in the second mode significantly overlaps the voltage range of the inductor in the third mode, to ensure that the linear amplification circuit can always maintain switching between output voltages at any location of an interval formed by the first voltage range, the second voltage range, and the third voltage range, thereby ensuring normal outputting of the output voltage at the first end of the inductor.

In a possible implementation, the first mode includes a buck buck mode, the second mode includes a buck-boost buck-boost mode, and the third mode includes a boost boost mode.

In a possible implementation, the mode selection circuit is further configured to perform time sequence control on the plurality of switch control signals. The switch amplification circuit is configured to: in response to the plurality of switch control signals, first switch the first power supply voltage to the second power supply voltage in the second mode, and then switch the second power supply voltage to the third power supply voltage; and first switch the third power supply voltage to the second power supply voltage, and switch the second power supply voltage to the first power supply voltage. In this way, in the second mode, overheads, caused by an excessively large voltage difference change caused by direct switching of the first power supply voltage to the third power supply voltage or switching of the third power supply voltage to the first power supply voltage, to selection of a switch device in the switch amplification circuit and stress of the switch device can be reduced.

In a possible implementation, the mode detection circuit includes a voltage division circuit, a first comparator, a second comparator, and an output circuit. The voltage division circuit is coupled to the first end of the inductor, the voltage division circuit is further coupled to a non-inverting end of the first comparator and a non-inverting end of the second comparator, the voltage division circuit is configured to output a first divided voltage to the non-inverting end of the first comparator and the non-inverting end of the second comparator, and the first divided voltage is less than the voltage at the first end of the inductor. An inverting end of the first comparator is coupled to a first reference level end, and the first comparator is configured to: receive a first reference level input by the first reference level end, and output a first comparison result based on the first reference level and the first divided voltage. An inverting end of the second comparator is coupled to a second reference level end, and the second comparator is configured to: receive a second reference level input by the second reference level end, and output a second comparison result based on the second reference level and the first divided voltage, where the first reference level is not equal to the second reference level. The output circuit is configured to output the mode selection signal to the mode selection circuit based on the first comparison result and the second comparison result. Herein, a relationship between the first reference level Vrefl, the second reference level Vref2, and the first divided voltage VFB3 and a mode corresponding to the mode selection signal are described as follows: When VFB3<Vref1<Vref2, and both the first comparison result and the second comparison result are logic "0", the mode selection signal output by the output circuit enables the first mode. When Vref1<VFB3<Vref2, the first comparison result is logic "1", and the second comparison result is logic "0", the mode selection signal output by the output circuit enables the second mode. When Vref1<Vref2<VFB3, and the first comparison result is logic "1" and the second comparison result is logic "1", the mode selection signal output by the output circuit enables the third mode. Certainly, according to this manner, more comparators may be further disposed to construct more comparison results, to implement output control of four or more levels in more modes.

In a possible implementation, the power supply circuit further includes a common-mode rejection circuit and a current conversion circuit, and the hysteresis comparison circuit includes a hysteresis comparator. The common-mode rejection circuit is coupled to the first end of the inductor, and the common-mode rejection circuit is further coupled to the current conversion circuit, and is configured to: perform common-mode rejection processing on the voltage at the first end of the inductor to generate a common-mode rejection voltage, and output the common-mode rejection voltage to the current conversion circuit. The current conversion circuit is further coupled to a non-inverting end of the hysteresis comparator, and the current conversion circuit is configured to: convert the common-mode rejection voltage to a first feedback voltage of a current domain, and output the first feedback voltage to the non-inverting end of the hysteresis comparator. An inverting end of the hysteresis comparator is further coupled to the first end of the inductor and the second end of the inductor through a current sensor. In this solution, a function of the hysteresis comparison circuit is mainly implemented through the hysteresis comparator, and an input signal is constructed for the hysteresis comparator through the common-mode rejection circuit, the current conversion circuit, and the current sensor.

In a possible implementation, the power supply circuit further includes a common-mode rejection circuit and a current conversion circuit, and the hysteresis comparison circuit includes a hysteresis comparator. The common-mode rejection circuit is coupled to the linear amplification circuit, the first end of the inductor, and the processing circuit, and the common-mode rejection circuit is further coupled to the current conversion circuit, and is configured to: perform common-mode rejection processing on the first power supply signal, the voltage at the first end of the inductor, and the bias voltage to generate a common-mode rejection voltage, and output the common-mode rejection voltage to the current conversion circuit. The current conversion circuit is further coupled to a non-inverting end of the hysteresis comparator, and the current conversion circuit is configured to: convert the common-mode rejection voltage to a first feedback voltage of a current domain, and output the first feedback voltage to the non-inverting end of the hysteresis comparator. An inverting end of the hysteresis comparator is further coupled to the first end of the inductor and the second end of the inductor through a current sensor. In this solution, a function of the hysteresis comparison circuit is mainly implemented through the hysteresis comparator, and an input signal is constructed for the hysteresis comparator through the common-mode rejection circuit, the current conversion circuit, and the current sensor.

In a possible implementation, the control circuit further includes a filter circuit coupled to the inverting end of the hysteresis comparator. The filter circuit is mainly configured to filter out an interference component of a signal input to the inverting end of the hysteresis comparator, to implement matching between the input signal and hardware of the control circuit.

In a possible implementation, the power supply circuit further includes a common-mode rejection circuit and a current conversion circuit, and the hysteresis comparison circuit includes a first comparator, a second comparator, and a latch. The common-mode rejection circuit is coupled to the first end of the inductor, the common-mode rejection circuit is further coupled to the current conversion circuit, and the common-mode rejection circuit is configured to: perform common-mode rejection processing on the voltage at the first end of the inductor to generate a common-mode rejection voltage, and output the common-mode rejection voltage to the current conversion circuit. The current conversion circuit is further coupled to a non-inverting end of the first comparator and a non-inverting end of the second comparator, and is configured to: convert the common-mode rejection voltage to a first feedback voltage of a current domain, and output the first feedback voltage to the non-inverting end of the first comparator and the non-inverting end of the second comparator. An output of the first comparator is coupled to a first input of the latch, and an output of the second comparator is coupled to a second input of the latch. An output of the latch is coupled to the mode selection circuit. An inverting end of the first comparator and an inverting end of the second comparator are further coupled to the first end of the inductor and the second end of the inductor through a current sensor. In this solution, a function of the hysteresis comparison circuit is mainly implemented through two comparators and one latch, and an input signal is constructed for the two comparators through the common-mode rejection circuit, the current conversion circuit, and the current sensor.

In a possible implementation, the power supply circuit further includes a common-mode rejection circuit and a current conversion circuit, and the hysteresis comparison circuit includes a first comparator, a second comparator, and a latch. The common-mode rejection circuit is coupled to the linear amplification circuit, the first end of the inductor, and the processing circuit, the common-mode rejection circuit is further coupled to the current conversion circuit, and the common-mode rejection circuit is configured: perform common-mode rejection processing on the first power supply signal, the voltage at the first end of the inductor, and the bias voltage to generate a common-mode rejection voltage, and output the common-mode rejection voltage to the current conversion circuit. The current conversion circuit is further coupled to a non-inverting end of the first comparator and a non-inverting end of the second comparator, and is configured to: convert the common-mode rejection voltage to a first feedback voltage of a current domain, and output the first feedback voltage to the non-inverting end of the first comparator and the non-inverting end of the second comparator. An output of the first comparator is coupled to a first input of the latch, and an output of the second comparator is coupled to a second input of the latch. An output of the latch is coupled to the mode selection circuit. An inverting end of the first comparator and an inverting end of the second comparator are further coupled to the first end of the inductor and the second end of the inductor through a current sensor. In this solution, a function of the hysteresis comparison circuit is mainly implemented through two comparators and one latch, and an input signal is constructed for the two comparators through the common-mode rejection circuit, the current conversion circuit, and the current sensor.

In a possible implementation, the control circuit further includes a first filter circuit and a second filter circuit, the first filter circuit is coupled to the inverting end of the first comparator, and the second filter circuit is coupled to the inverting end of the second comparator. The first filter circuit and the second filter circuit are mainly configured to filter out an interference component of a signal input to the hysteresis comparator, to implement matching between the input signal and hardware of the control circuit.

In a possible implementation, the control circuit further includes a first filter circuit and a second filter circuit. A series structure of the first filter circuit and the second filter circuit is coupled to the inverting end of the first comparator, and the second filter circuit is coupled to the inverting end of the second comparator. The first filter circuit and the second filter circuit are mainly configured to filter out an interference component of a signal input to the hysteresis comparator, to implement matching between the input signal and hardware of the control circuit.

According to a second aspect, a wireless communication system is provided. The wireless communication system includes: a processing circuit, a power amplifier, and the power supply circuit according to the first aspect and the possible implementations of the first aspect. The power supply circuit is coupled to the processing circuit and the power amplifier, and the processing circuit is further coupled to the power amplifier.

According to a third aspect, a chip is provided. The chip includes a substrate, and the power supply circuit, disposed on the substrate, according to the first aspect and the possible implementations of the first aspect.

According to a fourth aspect, an electronic device is provided. The electronic device includes a printed circuit board PCB and the foregoing power supply circuit or wireless communication system disposed on the PCB.

It should be understood that technical solutions in the second aspect to the fourth aspect of this application are consistent with the technical solutions of the first aspect of this application, and beneficial effect achieved in the aspects and the corresponding possible implementations are similar, and details are not described again.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a top view of an electronic device according to an embodiment of this application;
FIG. 2 is a bottom view of an electronic device according to an embodiment of this application;
FIG. 3 is a diagram of an internal structure of an electronic device with a rear cover opened according to an embodiment of this application;
FIG. 4 is a diagram of a structure of a wireless communication system according to an embodiment of this application;
FIG. 5 is a schematic of a structure of a processing circuit according to an embodiment of this application;
FIG. 6 is a diagram of curves of a sending signal and an envelope signal according to an embodiment of this application;
FIG. 7 is a diagram of a structure of a wireless communication system according to another embodiment of this application;
FIG. 8 is a schematic of a structure of a power supply circuit according to an embodiment of this application;
FIG. 9 is a schematic of a structure of a control circuit according to an embodiment of this application;
FIG. 10 is a time sequence diagram of a node signal of a power supply circuit according to an embodiment of this application;
FIG. 11 is a diagram of a structure of a wireless communication system according to still another embodiment of this application;
FIG. 12 is a schematic of a structure of a power supply circuit according to another embodiment of this application;
FIG. 13 is a diagram of an output voltage of a power supply circuit according to an embodiment of this application;
FIG. 14 is a schematic of a structure of a power supply circuit according to still another embodiment of this application;
FIG. 15 is a schematic of a structure of a power supply circuit according to yet another embodiment of this application;
FIG. 16 is a schematic of a structure of a control circuit according to another embodiment of this application;
FIG. 17 is a schematic of a structure of a filter circuit according to an embodiment of this application;
FIG. 18 is a schematic of a structure of a filter circuit according to another embodiment of this application;
FIG. 19 is a schematic of a structure of a filter circuit according to still another embodiment of this application; and
FIG. 20 is a diagram of a structure of a current sensor according to an embodiment of this application.

### DESCRIPTION OF EMBODIMENTS

The following describes embodiments of this application with reference to the accompanying drawings in embodiments of this application. In the following descriptions, reference is made to the accompanying drawings that form a part of this application and show specific aspects of embodiments of this application in an illustrative manner or in which specific aspects of embodiments of this application may be used. It should be understood that embodiments of this application may be used in other aspects, and may include structural or logical changes not depicted in the accompanying drawings.

In this application, unless otherwise clearly specified and limited, the term "coupling" may be a manner of implementing an electrical connection for signal transmission, and the term "coupling" may be a direct electrical connection, or may be an indirect electrical connection through an intermediate medium.

A linear amplification circuit/linear amplifier (linear amplifier, LA) is also referred to as a linear power amplifier, and the linear amplification circuit LA is an amplifier in which an output signal amplitude is proportional to an input signal amplitude. A typical linear amplification circuit LA includes: a class B power amplifier (class B) and a class AB power amplifier (class AB).

A switch amplification circuit/switching amplifier (switch amplifier, SA) is also referred to as a switching power amplifier or a switching-mode power amplifier. In comparison with that of the LA, efficiency of the SA is high. Usually, the efficiency of the SA may reach more than 90%, and may even reach 100% in an ideal state. A typical switching amplifier includes: a class D power amplifier.

A hysteresis comparison circuit is characterized by the fact that when an input signal gradually increases or decreases, an output is controlled by comparing with two unequal thresholds (a hysteresis window Vhyst formed). Specifically, when the input signal gradually increases and falls into the hysteresis window Vhyst, the output remains in a previous state until an output state jumps after the input signal is greater than a larger threshold. When the input signal gradually decreases and falls into the hysteresis window Vhyst, the output remains in the previous state until the output state jumps after the input signal is smaller than a smaller threshold. In this way, a transmission characteristic of the hysteresis comparison circuit has a shape of a "hysteresis" curve. A typical component of the hysteresis comparison circuit includes a hysteresis comparator, also referred to as a Schmitt trigger or a comparator with hysteresis.

Embodiments of this application provide a wireless communication system. The wireless communication system may be applied to an electronic device such as a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, a vehicle-mounted device, a smart car, a smart speaker, a robot, or smart glasses.

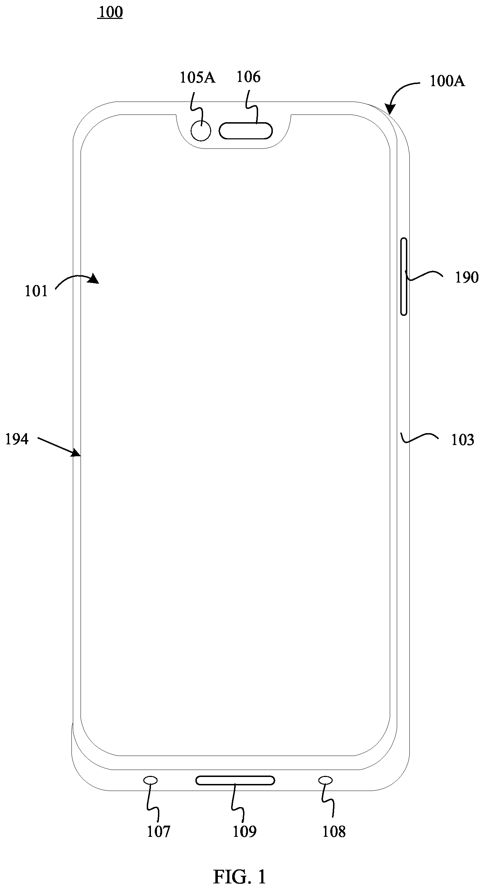

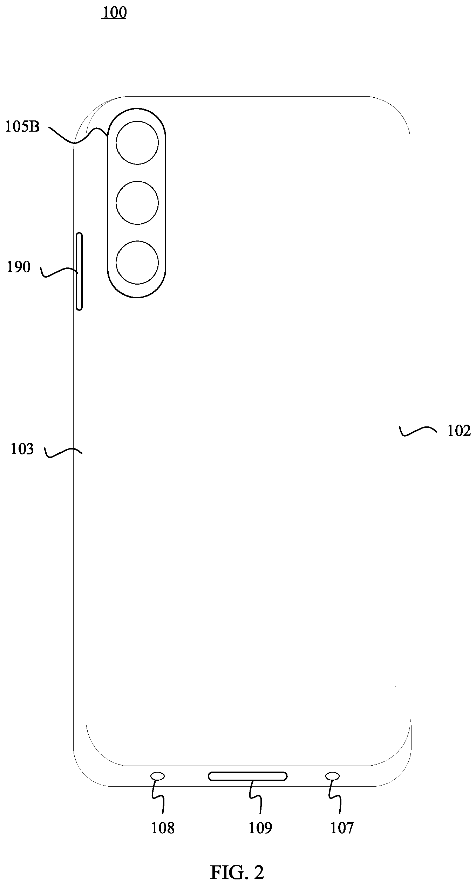

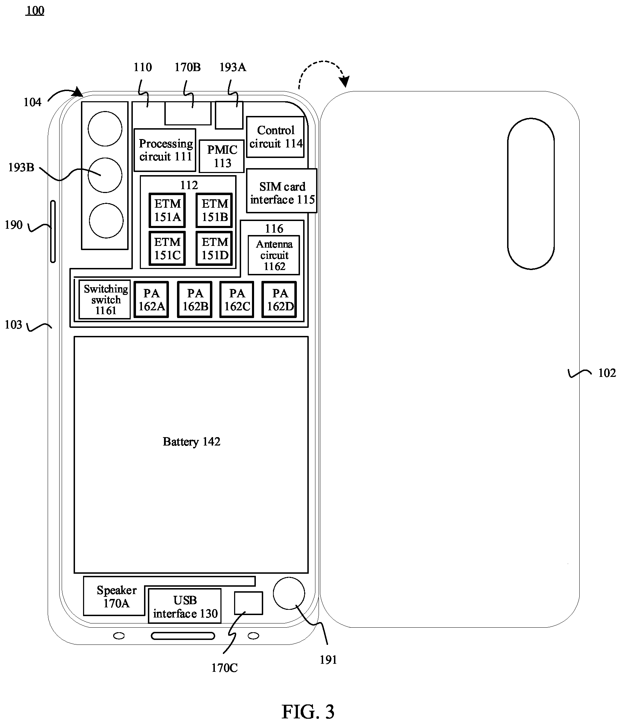

FIG. 1 to FIG. 3 are diagrams of a structure of an electronic device 100 according to embodiments of this application. FIG. 1 is a top view of an electronic device 100 according to an embodiment of this application. FIG. 2 is a bottom view of an electronic device 100 according to an embodiment of this application. FIG. 3 is a diagram of an internal structure of an electronic device 100 with a rear cover opened according to an embodiment of this application. FIG. 3 shows a specific configuration of various internal components of the electronic device. A dashed arrow in FIG. 3 indicates a direction in which the rear cover is opened. It may be understood that the structure of the electronic device 100 shown in FIG. 1 to FIG. 3 does not constitute a specific limitation on the electronic device 100 in embodiments of this application. In some possible implementations, in comparison with FIG. 1 to FIG. 3, the electronic device 100 may further include more or fewer components, combine some components, split some components, have different component arrangements, or the like. This is not specifically limited in embodiments of this application.

Refer to FIG. 1 and FIG. 2. The electronic device 100 may include a housing 100A. The housing 100A may include a front cover 101, a rear cover 102, and a frame 103. The front cover 101 and the rear cover 102 are disposed opposite to each other. The frame 103 surrounds the front cover 101 and the rear cover 102, and assembles the front cover 101 to the rear cover 102 together.

The front cover 101 may be a glass cover, and a display 194 is disposed under the front cover 101. A structure corresponding to an input/output component may be disposed around a periphery of the housing 100A. For example, a hole 105A corresponding to a front-facing camera and/or a hole 106 corresponding to a receiver are/is provided on the top of the front cover 101, a button 190 may be disposed on one side of the frame 103, a hole 107 corresponding to a microphone, a hole 108 corresponding to a speaker, and a hole 109 corresponding to a USB interface are provided on the bottom of the frame 103, and a hole 105B corresponding to a rear-facing camera may be provided on the top of the rear cover 102. Certainly, there may alternatively be another structure disposed around the housing 100A. This is not specifically limited in embodiments of this application.

Further, a cavity may be formed inside the housing 100A, and the internal components may be accommodated in the cavity. For example, as shown in FIG. 3, the internal components may be accommodated in a cavity 104. During actual application, the internal components may include components such as a printed circuit board (printed circuit board, PCB) 110, a battery 142 configured to supply power to the internal components, a speaker 170A configured to convert an audio electrical signal into a sound signal, a receiver 170B configured to convert an audio electrical signal to a sound signal, a microphone 170C configured to convert a sound signal to an audio electrical signal, a USB interface 130, a camera 193A, a camera 193B, and a motor 191 configured to generate a vibration prompt. A processing circuit 111, a power supply circuit 112, a power management integrated circuit (power management integrated circuit, PMIC) 113, a control circuit 114, a SIM card interface 115, a front-end (front-end module, FEM) circuit 116, and the like may be disposed on the printed circuit board 110. The FEM circuit 116 may include at least one power amplifier (PA), a switching switch 1161, an antenna circuit 1162, and the like. The power supply circuit 112 may include at least one voltage modulation circuit 151. For example, the voltage modulation circuit 151 may be an envelope tracking modulator (envelope tracking modulator, ETM) or an average power tracking (APT) modulator. An envelope tracking modulator ETM is used as an example for description in FIG. 2. The PMIC 113 provides a battery voltage VBatt for the at least one envelope tracking modulator ETM, the at least one envelope tracking modulator may be configured to supply power to the at least one power amplifier, and one envelope tracking modulator is configured for one power amplifier.

It should be noted that a filter, a low noise amplifier, an audio codec, an internal memory, a sensor, an inductor, a capacitor, and the like may be further disposed on the PCB 110. Herein, to clearly display embodiments of this application, the filter, the low noise amplifier, the audio codec, the internal memory, the sensor, the inductor, and the capacitor are not shown in FIG. 3. Further, because components on the PCB 110 are tightly arranged, to place all components in limited space, an arrangement manner of the components on the PCB 110 is not specifically limited in embodiments of this application. For example, the internal components may be disposed on one side (for example, one side facing the rear cover 102) of the PCB 110, or the internal components may be disposed on two sides (for example, one side facing the rear cover 102 and one side facing the front cover 101 respectively) of the PCB 110. This is not specifically limited in embodiments of this application.

For example, as shown in FIG. 3, the at least one power amplifier may include: a power amplifier PA 162A, a power amplifier PA 162B, a power amplifier PA 162C, and a power amplifier PA 162D. Different power amplifiers may support a same frequency band or different frequency bands, and are configured to amplify radio frequency signals of a same frequency band or different frequency bands and a same bandwidth range or different bandwidth ranges. It is assumed that the power amplifier PA 162A may be configured to amplify a radio frequency signal meeting a bandwidth range (wideband) A, the power amplifier PA 162B may be configured to amplify a radio frequency signal meeting a bandwidth range B, the power amplifier PA 162C may be configured to amplify a radio frequency signal meeting a bandwidth range C, and the power amplifier PA 162D may be configured to amplify a radio frequency signal meeting a bandwidth range D, where one or more of A, B, C, and D may be the same or different from each other. Correspondingly, the at least one envelope tracking modulator may include: an envelope tracking modulator ETM 151A, an envelope tracking modulator ETM 151B, an envelope tracking modulator ETM 151C, and an envelope tracking modulator ETM 151D. Different envelope tracking modulators may support a same bandwidth range or different bandwidth ranges, the envelope tracking modulator ETM 151A may supply power to the power amplifier PA 162A, the envelope tracking modulator ETM 151B may supply power to the power amplifier PA 162B, the envelope tracking modulator ETM 151C may supply power to the power amplifier PA 162C, and the envelope tracking modulator ETM 151D may supply power to the power amplifier PA 162D.

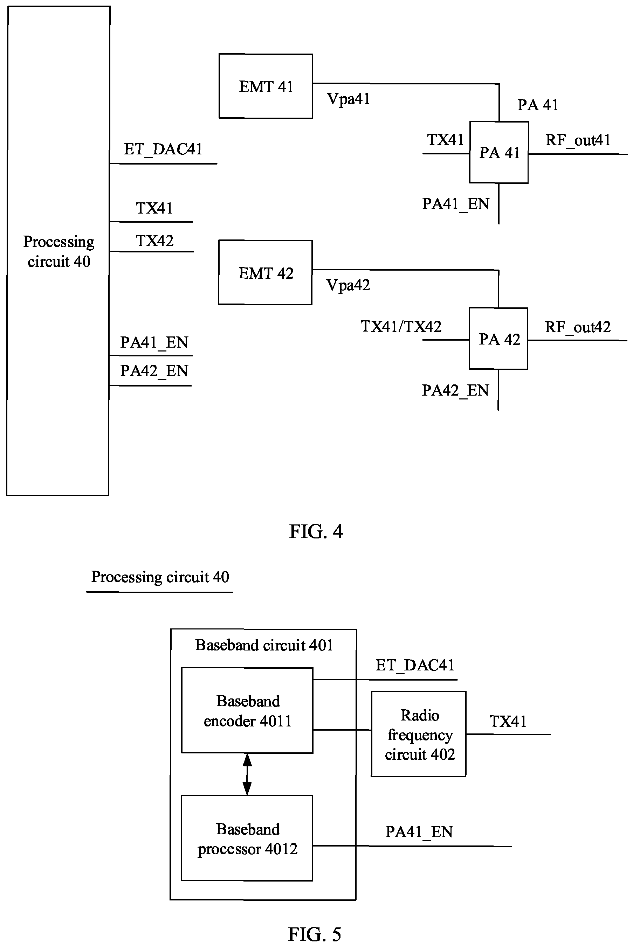

Specifically, FIG. 4 is a diagram of a structure of a wireless communication system according to an embodiment of this application. The wireless communication system may be used in the electronic device 100 shown in FIG. 1 to FIG. 3, to transmit a radio frequency signal. The wireless communication system may include a processing circuit 40, a power amplifier PA 41, a power amplifier PA 42, an envelope tracking modulator ETM 41, and an envelope tracking modulator ETM 42. Herein, the processing circuit 40 may be a part or all of the processing circuit 111 shown in FIG. 1 to FIG. 3. When the wireless communication system transmits a radio frequency signal, the processing circuit 40 may generate a first radio frequency signal TX41 based on to-be-sent data on one channel. For example, a baseband circuit in the processing circuit 40 generates a baseband signal (base signal, BS), which may be, for example, an in-phase quadrature (In-phase quadrature, IQ) signal, and inputs the baseband signal to a radio frequency circuit in the processing circuit 40. The radio frequency circuit modulates the baseband signal BS to generate the first radio frequency signal TX41, and the first radio frequency signal TX41 is a radio frequency signal.

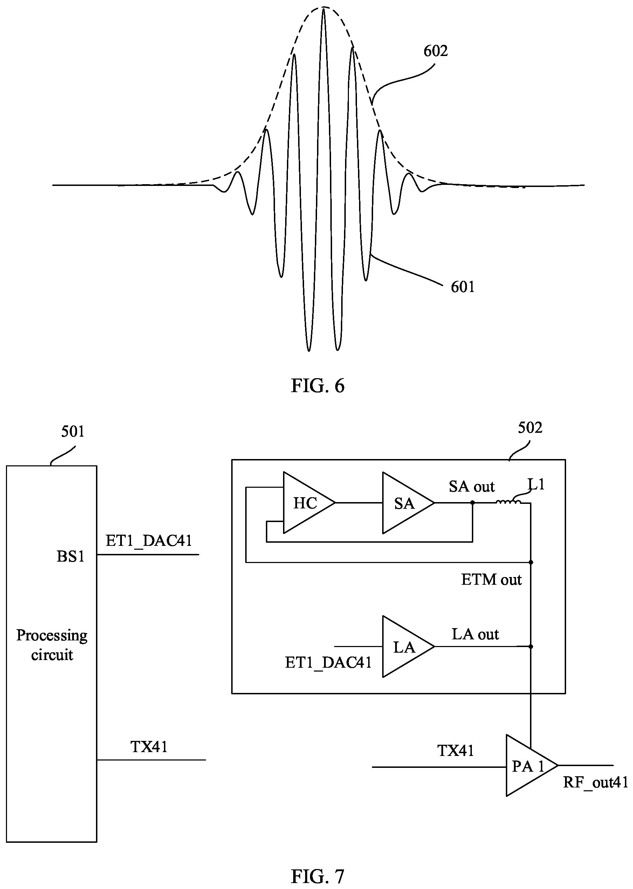

Further, the processing circuit 40 may further provide a first envelope signal ET_DAC41 for the envelope tracking modulator ETM 41 and the envelope tracking modulator ETM 42. FIG. 6 is a diagram of a first radio frequency signal TX41 and a first envelope signal ET_DAC41 according to an embodiment of this application. As shown in FIG. 6, a curve 601 represents a waveform of one radio frequency signal (for example, the first radio frequency signal TX41), a curve 602 is a curve formed by connecting the first radio frequency signal TX41 at highest amplitude points of different frequencies, and the curve 602 may be referred to as an envelope signal (the first envelope signal ET_DAC41) of the curve 601. An amplitude of the first envelope signal ET_DAC41 varies with an amplitude of the first radio frequency signal TX41.

The envelope tracking modulator ETM 41 is configured to supply power to the power amplifier PA 41 based on the first envelope signal ET_DAC41. When the first radio frequency signal TX41 meets the bandwidth range A (for example, the first radio frequency signal TX41 meets a bandwidth range of a frequency band in a 4G network), the power amplifier PA 41 is configured to amplify output power of the first radio frequency signal TX41 based on a power source voltage Vpa41 output by the envelope tracking modulator ETM 41, and output a first amplified output signal RF_out41.

The envelope tracking modulator ETM 42 is configured to supply power to the power amplifier PA 42 based on the first envelope signal ET_DAC41. When the first radio frequency signal TX41 meets the bandwidth range B (for example, the first radio frequency signal TX41 meets bandwidth ranges specified by frequency bands n41, n77, n78, and n79 in a 5G network), the power amplifier PA 42 is configured to amplify output power of the first radio frequency signal TX41 based on a power source voltage Vpa42 output by the envelope tracking modulator ETM 42, and output a second amplified output signal RF_out42. FIG. 4 shows only two ETMs. It may be understood that more or fewer ETMs may alternatively be included.

In some possible implementations, as shown in FIG. 4, because the wireless communication system may support dual-channel or multi-channel transmission of a technology such as multiple-input multiple-output (multiple-in multipleout, MIMO), the wireless communication system may provide radio frequency signals, namely, TX41 and TX42, of two or more channels. When radio frequency signals of two channels meet different bandwidth ranges, system indicators of the wireless communication system are greatly different, and requirements for the envelope tracking modulator are also greatly different. Therefore, for different radio frequency signals, a plurality of envelope tracking modulators need to be disposed for different bandwidth ranges. For example, as shown in FIG. 4, the envelope tracking modulator ETM 41 is correspondingly disposed for the first radio frequency signal TX41, and the envelope tracking modulator ETM 42 is correspondingly disposed for the second radio frequency signal TX2. The foregoing wireless communication system needs two envelope tracking modulators in total to separately supply power to power amplifiers in different operating frequency bands in different bandwidth ranges.

In some possible implementations, the processing circuit 111 shown in FIG. 3 may include at least one baseband circuit and at least one radio frequency (RF) circuit. One baseband circuit may correspond to one radio frequency circuit. The baseband circuit and the radio frequency circuit corresponding to the baseband circuit may modulate a signal based on one or more communication technologies. For example, a first baseband circuit and a first radio frequency circuit may modulate a signal based on a 5G technology, a second baseband circuit and a second radio frequency circuit may modulate a signal based on a 4G technology, a third baseband circuit and a third radio frequency circuit may modulate a signal based on a Wi-Fi technology, and a fourth baseband circuit and a fourth radio frequency circuit may modulate a signal based on a Bluetooth technology. Alternatively, the first baseband circuit and the first radio frequency circuit may modulate a signal based on both a 4G technology and a 5G technology, and the second baseband circuit and the second radio frequency circuit may modulate a signal based on a Wi-Fi technology. Certainly, in some possible implementations, one baseband circuit may alternatively correspond to a plurality of radio frequency circuits, to improve integration. During actual application, the radio frequency circuit may be implemented through a radio frequency integrated circuit (radio frequency integrated circuit, RFIC).

During actual application, FIG. 5 is a schematic of a structure of a processing circuit 40 according to an embodiment of this application. Refer to FIG. 5. The processing circuit 40 may include a baseband circuit 401 and a radio frequency circuit 402. The baseband circuit 401 may include a baseband encoder 4011 and a baseband processor 4012. The baseband encoder 4011 encodes a received signal source, and outputs a baseband signal Bs (for example, a first sending signal in this embodiment of this application) after encoding. The baseband encoder 4011 may further determine an envelope of the baseband signal Bs. For example, the baseband encoder 4011 may calculate an amplitude of the baseband signal Bs, and obtain an average value of a plurality of amplitudes. The baseband encoder 4011 may output an envelope signal ET_DAC (for example, the first envelope signal ET_DAC41) that includes envelope information of the baseband signal Bs. The baseband processor 4012 may be a central processing unit (central processing unit, CPU), a microprocessor (microcontroller unit, MCU), or the like. The baseband processor 4012 may have processing and control functions, to generate an enable signal of the power amplifier, for example, an enable signal PA41_EN of the power amplifier PA 41 and/or an enable signal PA42_EN of the power amplifier PA 42. The radio frequency circuit 402 is configured to receive the baseband signal Bs from the baseband circuit 401, and process the baseband signal Bs to generate the first radio frequency signal TX41. For example, the radio frequency circuit 402 may perform processing such as conversion to analog, filtering, and up-conversion, to obtain the first radio frequency signal TX41 of the radio frequency. In some possible implementations, the first envelope signal ET_DAC41 may alternatively be generated by the radio frequency circuit 402.

It should be noted that the foregoing one or more communication technologies can be understood as one or more mobile communication technologies, for example, a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), and an emerging wireless communication technology (which may also be referred to as a 5th generation mobile communication technology, 5th generation mobile networks, 5th generation wireless systems, 5th-generation, or 5th-generation new radio, 5G, 5G technology, or 5G NR for short). The wireless communication technology may include a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

Certainly, the processing circuit 111 may further include an application circuit. The application circuit may include one or more processors. For example, the application circuit may include, for example, but is not limited to, a circuit of one or more single-core or multi-core processors. The (one or more) processors may include a combination of a general-purpose processor and a dedicated processor (for example, a graphics processing unit or an application processor), for example, an application processor (application processor, AP), a modem processor, a graphics processing unit (graphics processing unit, GPU), an image signal processor (image signal processor, ISP), a neural-network processing unit (neural-network processing unit, NPU), a video codec, or a digital signal processor (digital signal processor, DSP). These processors may be coupled to a memory/storage or may include a memory/storage, and may be configured to execute instructions stored in the memory/storage, so that various applications or systems can run on the electronic device 100.

In some possible implementations, the baseband circuit and the radio frequency circuit may be integrated with another component in the processing circuit 111 into one independent component, or the baseband circuit and the radio frequency circuit may be independent components independent of the processing circuit 111. In some embodiments, one baseband circuit and one radio frequency circuit may be integrated into one independent component, and the independent component and the processing circuit 111 are separately disposed.

During specific application, the baseband circuit may include, for example, but is not limited to, a circuit of one core processor. The baseband circuit (multi-core or more single cores) may include one or more baseband processors or control logic, and these processors or the control logic generates a baseband signal used for a sending path of the radio frequency circuit. The baseband circuit may be coupled to an application circuit interface, to generate and process the baseband signal and control an operation of the radio frequency circuit.

In some possible implementations, the baseband circuit may include a 3rd-generation (3G) baseband processor, a 4th-generation (4G) baseband processor, a 5th-generation (5G) baseband processor, or another future baseband processor. The baseband circuit may process various radio control functions used by the radio frequency circuit to communicate with one or more wireless networks.

In some other implementations, a part of or all functions of the baseband processor may be included in a module stored in a memory, and may be executed by a central processing unit (CPU). The radio control function may include but is not limited to signal modulation/demodulation, encoding/decoding, radio frequency shift, and the like.

During actual application, a modulation/demodulation function of the baseband circuit may include a function such as fast fourier transform (fast fourier transform, FFT), precoding, or constellation mapping/demapping. An encoding/decoding function of the baseband circuit may include a function such as convolution, tail-biting convolution, turbo, Viterbi, or low density parity check (low density parity check, LDPC) encoder/decoder. Certainly, implementations of the foregoing modulation/demodulation and encoder/decoder functions are not limited to these examples, and another suitable function may be included in another implementation.

In some implementations, the baseband circuit may further include one or more audio digital signal processors (digital signal processors, DSP). The (one or more) audio DSPs may include an element for compression/decompression and echo cancellation, and may include another suitable processing element in another implementation.

In some implementations, components in the baseband circuit may be appropriately combined in a single chip or a single chipset, or may be disposed on a same PCB. In addition, a part of or all components of the baseband circuit and the application circuit may be disposed on a system on chip (system on chip, SOC).

With development of wireless communication technologies, the baseband circuit may support one or more wireless communication technologies. Therefore, the baseband circuit may support communication with an evolved universal terrestrial radio access network (evolved universal mobile telecommunications system terrestrial radio access network, E-UTRAN) or another wireless metropolitan area network (wireless metropolitan area network, WMAN), a wireless local area network (wireless local area network, WLAN), a wireless personal area network (wireless personal area network communication technologies, WPAN), or the like. A baseband circuit configured to support a plurality of wireless communication protocols may be referred to as a multi-mode baseband circuit.

It should be noted that because functions of the electronic device 100 are increasingly complete, a quantity of internal components of the electronic device 100 is also increasing. In this case, the cavity 104 may further include a sensor, for example, a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

With development of communication technologies, as a mobile wireless communication technology gradually transits from a conventional voice communication-centric era to a 4th generation mobile communication technology (4th generation mobile communication technology, 4G) era of mobile broadband and a 5G era of a networked society, electronic devices having a mobile communication function or a wireless communication function have become increasingly common, providing wireless communication services for users. There is a growing demand from the users for application of the mobile wireless communication technology, along with increasing requirements for higher communication rates, and the users require that they can access wireless communication networks anytime and anywhere. These requirements fuel booming development of the mobile wireless communication technology. In this case, the electronic devices need to support various communication modes and standards, from 4G long term evolution (long term evolution, LTE) to 5G new radio (new radio, NR), from early wireless fidelity (wireless fidelity, Wi-Fi) to Wi-Fi 6, and the like, and communication bandwidth increasingly widens: from 4G LTE with bandwidth of 1.4 MHz to 5G NR with bandwidth of 100 MHz or even 200 MHz. In addition, in a broadband Wi-Fi and millimeter-wave communication system, signal bandwidth is wider. In these electronic devices, it is a common behavior to perform corresponding processing on radio frequency (radio frequency, RF) signals. For example, before the radio frequency signals are sent, a power amplifier (power amplifier, PA) needs to be used to increase output power of the radio frequency signals (for example, maintain sufficient energy per bit). As a quantity of frequency bands increases and more advanced wireless communication features, for example, uplink carrier aggregation (carrier aggregation, CA) and uplink multiple-input multiple-output (multiple-input multiple-output, MIMO), are supported, several uplink transmitters are required to work at the same time. In addition, to improve coverage of a cellular system and compensate for a loss between an output of the PA and an antenna, output power of the PA is required to become larger. Therefore, a transmitter of a current electronic device is a transmitter system in which a plurality of wireless communication systems coexist, for example, Wi-Fi, cellular, and satellite communication. When the PA is used in different wireless communication systems, actual power is different. A service life of the electronic device is closely related to a battery capacity and system efficiency. In the context in which a current battery capacity cannot be continuously expanded and power consumption of another part in the electronic device is increasingly high, improving transmit efficiency of a radio frequency part, especially a radio frequency PA system that occupies a large proportion of power consumption, is very meaningful for prolonging a service life of a terminal. Therefore, to reduce power consumption, a plurality of power supply voltages need to be provided for the PA.

To provide a plurality of power supply voltages for a PA, embodiments of this application provide a wireless communication system. With reference to FIG. 7, the wireless communication system includes: a processing circuit 501, a switch amplification circuit SA, a linear amplification circuit LA, a control circuit HC, an inductor L1, and a power amplifier PA 1. The control circuit HC is coupled to the switch amplification circuit SA. For example, the switch amplification circuit SA includes an output SA out and an input, and the control circuit HC is coupled to the output SA out and the input of the switch amplification circuit SA. The linear amplification circuit LA is coupled to a first end of the inductor L1, for example, an output LA out of the linear amplification circuit LA. The switch amplification circuit SA is coupled to a second end of the inductor L1. For example, the output SA out of the switch amplification circuit SA is coupled to the second end of the inductor L1, and the first end of the inductor L1 is configured to be coupled to the power amplifier PA 1. The linear amplification circuit LA is further configured to be coupled to the processing circuit 501. For example, the linear amplification circuit LA is coupled to the processing circuit 501 through the input. The linear amplification circuit LA, the switch amplification circuit SA, the control circuit HC, and the inductor L1 form an ETM 502 used as a power supply circuit of the power amplifier PA 1, and the first end of the inductor L1 is used as an output ETM out of the ETM 502.

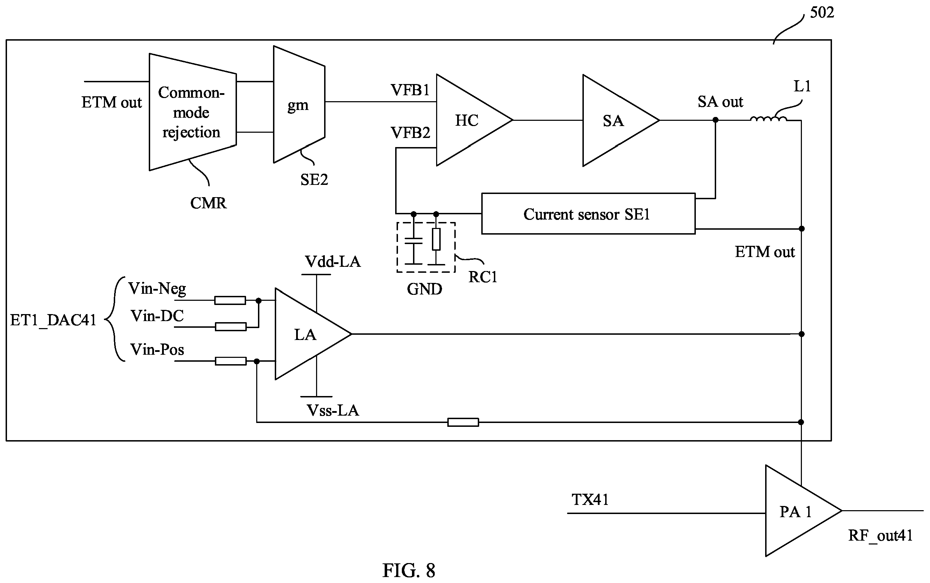

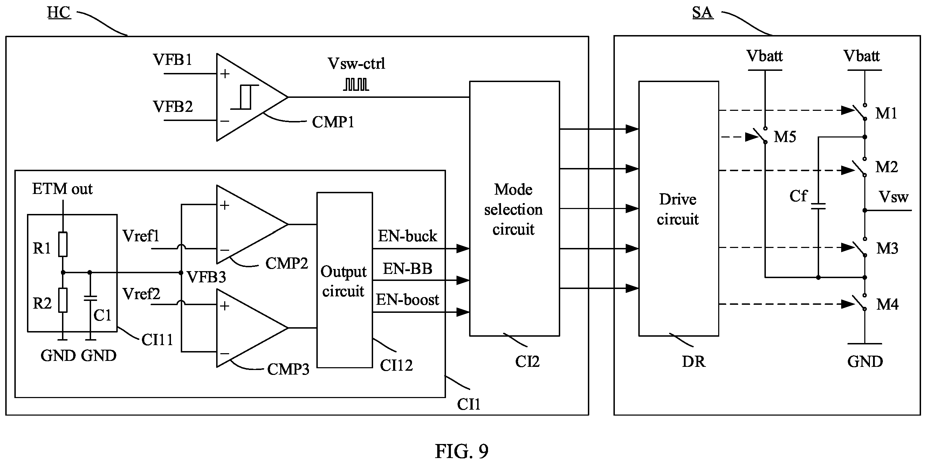

With reference to FIG. 8 and FIG. 9, the control circuit HC includes a mode detection circuit CI1, a mode selection circuit CI2, and a hysteresis comparison circuit CMP1. The mode detection circuit CI1 is coupled to the first end (namely, ETM out) of the inductor L1, the mode selection circuit CI2 is coupled to the input of the switch amplification circuit SA, and the hysteresis comparison circuit CMP1 is coupled to the first end (namely, ETM out) of the inductor L1 and the second end (SA out) of the inductor L1. The mode detection circuit CI1 and the hysteresis comparison circuit CMP1 are further coupled to the mode selection circuit CI2. Usually, with reference to FIG. 8, the power supply circuit further includes a common-mode rejection circuit CMR and a current conversion circuit SE2, and the hysteresis comparison circuit CMP1 may use a hysteresis comparator. The common-mode rejection circuit CMR is coupled to the first end of the inductor L1, the common-mode rejection circuit CMR is further coupled to an input of the current conversion circuit SE2, and the common-mode rejection circuit CMR is configured to: perform common-mode rejection processing on a voltage at the first end of the inductor L1 to generate a common-mode rejection voltage, and output the common-mode rejection voltage to the current conversion circuit SE2. An output of the current conversion circuit SE2 is coupled to a non-inverting end (+) of the hysteresis comparator CMP1, and the current conversion circuit SE2 is configured to: convert the common-mode rejection voltage to a first feedback voltage VFB1 of a current domain, and output the first feedback voltage VFB1 to the non-inverting end (+) of the hysteresis comparator CMP1. An inverting end (-) of the hysteresis comparator CMP1 is further coupled to the first end of the inductor L1 and the second end of the inductor L1 through a current sensor SE1. The current sensor SE1 outputs a second feedback voltage VFB2 to the inverting end (-) of the hysteresis comparator CMP1 by detecting a current of the inductor L1. In some examples, both the current sensor SE1 and the current conversion circuit SE2 may use an operational transconductance amplifier (operational transconductance amplifier, OTA or gm for short).

Based on the foregoing structure, the linear amplification circuit LA is configured to output a first power supply signal based on a first envelope signal ET_DAC41 output by the processing circuit 501. The hysteresis comparison circuit CMP1 is configured to output a first control signal Vsw-ctrl to the mode selection circuit C12 in response to voltages at the first end and the second end of the inductor L1. When the hysteresis comparison circuit uses the hysteresis comparator, the hysteresis comparator is mainly configured to output the first control signal Vsw-ctrl based on the first feedback voltage VFB1 and the second feedback voltage VFB2. The mode detection circuit CI1 is configured to output a mode selection signal to the mode selection circuit CI2 in response to the voltage at the first end of the inductor L1. The mode selection circuit CI2 is configured to output a plurality of switch control signals to the switch amplification circuit SA in response to the mode selection signal and the first control signal Vsw-ctrl. The switch amplification circuit SA is configured to output, by the switch amplification circuit, a first power supply voltage or a second power supply voltage in a first mode in response to the plurality of switch control signals, where the second power supply voltage is greater than the first power supply voltage. The switch amplification circuit SA is further configured to output, by the switch amplification circuit, the first power supply voltage or a third power supply voltage in a second mode in response to the plurality of switch control signals, where the third power supply voltage is greater than the second power supply voltage. The switch amplification circuit SA is configured to output, by the switch amplification circuit, the second power supply voltage or the third power supply voltage in a third mode in response to the plurality of switch control signals. The first envelope signal ET_DAC41 may be an envelope signal of a sending signal BS1 of the processing circuit 501. In FIG. 8, the first envelope signal ET_DAC41 may be represented as a pair of alternating signals (including an input negative voltage Vin-Neg and an input positive voltage Vin-pos) and a direct current offset input voltage Vin-DC. To match input impedance of the linear amplification circuit LA, the input negative voltage Vin-Neg, the input positive voltage Vin-pos, and the direct current offset input voltage Vin-DC are separately input to the linear amplification circuit LA through one resistor. In addition, in FIG. 8, an input of the linear amplification circuit LA that is connected to the input positive voltage Vin-pos is further coupled to the first end (namely, ETM out) of the inductor L1 through a feedback loop, to implement feedback control.

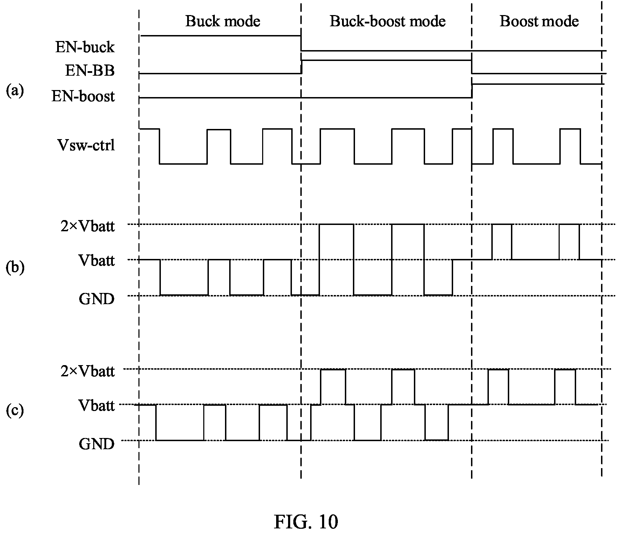

With reference to FIG. 10, an example in which the first mode is a buck buck mode, the second mode is a buck-boost buck-boost mode, and the third mode is a boost boost mode is used. Based on the switch amplification circuit SA shown in FIG. 9 and (a) in FIG. 10, when mode selection signals are respectively enable signals for enabling different modes (for example, EN-buck is an enabled buck mode, EN-BB is an enabled buck-boost mode, and EN-boost is an enabled boost mode), the mode selection circuit may generate a switch control signal for each switch in the switch amplification circuit SA based on a corresponding enable signal and the first control signal Vsw-ctrl having a duty cycle. As shown in FIG. 9, the provided switch amplification circuit SA includes a drive circuit DR and a switched capacitor SC circuit, and the switched capacitor SC circuit includes five switches M1 to M5 and a flying capacitor Cf. Switches M1 to M4 are connected in series between the power supply (used to provide a battery voltage Vbatt) and a ground GND, switches M5 and M4 are connected in series between the power supply (used to provide the battery voltage Vbatt) and the ground GND, the flying capacitor Cf is connected between a connection point of the switches M5 and M4 and a connection point of the switches M1 and M2, and a connection point of the switches M2 and M3 is used as an output SA out of the SA to provide a voltage Vsw for the second end of the inductor. The drive circuit DR is connected to control ends of the switches M1 to M5, and is configured to generate a drive level based on the switch control signal of each switch to control turn-on or cut-off of each switch. In an example, with reference to (b) in FIG. 10, in the first mode, the output voltage Vsw=Vbatt or 0V may be implemented by controlling turn-on or cut-off of M1 and M2. In another example, with reference to (b) in FIG. 10, in the second mode, the output voltage Vsw=0V may be implemented by controlling turn-on of M1 and M4, and the flying capacitor Cf is charged; and then the flying capacitor Cf is connected in series to the power supply by controlling turn-on of M2 and M5, to implement the output voltage Vsw=2×Vbatt. In another example, with reference to (b) in FIG. 10, in the third mode, the output voltage Vsw=Vbatt may be implemented by controlling turn-on of M1, M2, and M4, and the flying capacitor Cf is charged; and then the flying capacitor Cf is connected in series to the power supply by controlling turn-on of M2 and M5, to implement the output voltage Vsw=2×Vbatt. In this way, based on the structure shown in FIG. 9, the first power supply voltage may be 0 V, the second power supply voltage is Vbatt, and the third power supply voltage is 2×Vbatt. In addition, in the buck-boost mode, to reduce overheads caused by an excessively large change of a voltage difference between voltages borne by the switch before and after switching when Vsw is switched between 0 V and 2×Vbatt, the mode selection circuit is further configured to perform time sequence control on the plurality of switch control signals. The switch amplification circuit SA is configured to: in response to the plurality of switch control signals, first switch the first power supply voltage to the second power supply voltage in the second mode, and then switch the second power supply voltage to the third power supply voltage; and switch the third power supply voltage to the second power supply voltage, and then switch the second power supply voltage to the first power supply voltage. For example, based on (c) in FIG. 10, when the voltage Vsw is switched from 0 V to 2×Vbat, the output voltage Vsw=0 V may be first implemented by controlling turn-on of M1 and M4, and the flying capacitor Cf is charged; then, the output voltage Vsw=Vbatt is implemented by controlling turn-on of M1 and M2; and finally, the flying capacitor Cf is connected in series to the power supply by controlling turn-on of M2 and M5, to implement the output voltage Vsw=2×Vbatt. When the voltage Vsw is switched from 2×Vbat to 0 V, and the flying capacitor Cf may be first connected in series to the power supply by controlling turn-on of M2 and M5, to implement the output voltage V_{SW}=2×Vbatt; then, the output voltage Vsw=Vbatt is implemented by controlling turn-on of M1 and M2; and finally, the output voltage Vsw=0 V is implemented by controlling turn-on of M1 and M4, and the flying capacitor Cf is charged.

Based on the foregoing structure, the provided control circuit HC is applicable to an ETM having a 3-level switch, and the voltage Vsw output by the switch amplification circuit SA may be 0, Vbatt, or 2×Vbatt. The switch amplification circuit SA has three working modes:
a buck (buck) mode, where Vsw is switched between 0 and Vbatt;
a buck-boost (buck-boost) mode, where Vsw is switched between 0, Vbatt, and 2×Vbatt; and
a boost (boost) mode, where Vsw is switched between Vbatt and 2×Vbatt.

It should be noted that a structure of the switch amplification circuit SA in FIG. 9 is not limited in this embodiment of this application. In some examples, the switch amplification circuit SA may alternatively be implemented by using another structure. For example, the switch amplification circuit SA may include more flying capacitors Cf and switches, or may further include an inductor. In addition, the switch amplification circuit SA may further provide more modes. For example, in another mode, the SA may further output the third power supply voltage or the fourth power supply voltage under control of the plurality of switch control signals, and the fourth power supply voltage is greater than the third power supply voltage. That is, the SA may be extended to an ETM application with four or more levels.

In this way, the voltage Vsw is filtered by the inductor L1 and converted from a rectangular wave to a triangular wave, and supplies power to the PA together with the first power supply signal output by the LA, so that a plurality of power supply voltages are provided for the PA. In comparison with directly supplying power to the PA by using a power source voltage or supplying power by using two conventional voltages, because the power supply circuit provided in this embodiment of this application may provide the plurality of power supply voltages, actual power of wireless communication system at different frequency bands can be better adapted, thereby reducing power consumption.

In addition, as shown in FIG. 9, the mode detection circuit CI1 includes a voltage division circuit CI11, a first comparator CMP2, a second comparator CMP3, and an output circuit CI12.

The voltage division circuit CI11 is coupled to the first end (namely, ETM out) of the inductor L1, the voltage division circuit CI11 is further coupled to a non-inverting end (+) of the first comparator CMP2 and a non-inverting end (+) of the second comparator CMP3, the voltage division circuit CI11 is configured to output a first divided voltage VFB3 to the non-inverting end (+) of the first comparator CMP2 and the non-inverting end (+) of the second comparator CMP3, and the first divided voltage VFB3 is less than the voltage at the first end of the inductor L1. An inverting end (-) of the first comparator CMP2 is coupled to a first reference level end, and the first comparator CMP2 is configured to: receive a first reference level Vrefl input by the first reference level end, and output a first comparison result based on the first reference level Vrefl and the first divided voltage VFB3. An inverting end (-) of the second comparator CMP3 is coupled to a second reference level end, and the second comparator CMP3 is configured to: receive a second reference level Vref2 input by the second reference level end, and output a second comparison result based on the second reference level Vrefl and the first divided voltage VFB3, where the first reference level Vrefl is not equal to the second reference level Vref2. The output circuit CI12 is configured to output the mode selection signal to the mode selection circuit C12 based on the first comparison result and the second comparison result. Herein, a relationship between the first reference level Vrefl, the second reference level Vref2, and the first divided voltage VFB3 and a mode enable signal corresponding to the mode selection signal are described as follows: When VFB3<Vref1<Vref2, and both the first comparison result and the second comparison result are logic "0", the output circuit CI12 outputs EN-buck. When Vref1<VFB3<Vref2, the first comparison result is logic "1", and the second comparison result is logic "0", the output circuit CI12 outputs EN-BB. When Vref1<Vref2<VFB3, and the first comparison result is logic "1", and the second comparison result is logic "1", the output circuit CI12 outputs EN-boost. Certainly, according to this manner, more comparators may be further disposed to construct more comparison results, to implement output control of four or more levels in more modes.

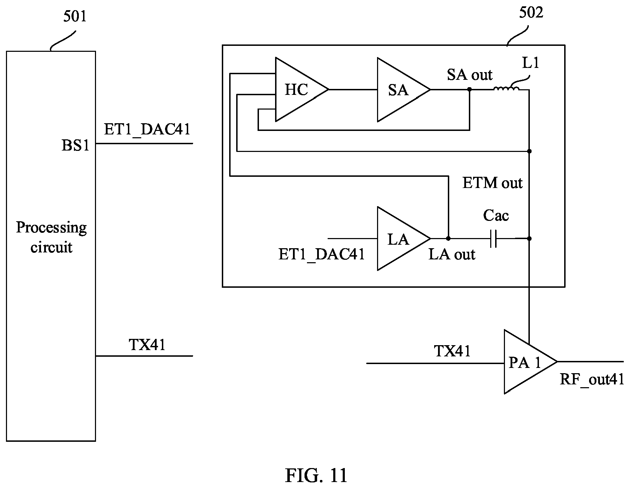

In the foregoing solution, the switch amplification circuit SA and the linear amplification circuit LA are directly coupled through the inductor L1, and this architecture is usually a direct current (direct current, DC) coupling architecture in the industry. It should be noted that, to ensure optimal ETM performance (which includes high bandwidth and power efficiency), an alternating current (alternating current AC) coupling architecture is crucial. In comparison with a DC coupling architecture, an AC coupling architecture can reduce a power supply voltage required by the linear amplification circuit LA (namely, power supplies Vdd-LA and Vss-LA of the LA in FIG. 8), and reduce a power supply requirement of the linear amplification circuit, and improve total ETM bandwidth and total ETM efficiency. Therefore, most advanced and practical ETMs are based on the alternating current coupling architecture. Based on FIG. 11, in the ETM 502 (FIG. 11) that is structurally implemented in the alternating current coupling architecture, one coupling capacitor Cac is introduced between the linear amplification circuit LA and the switch amplification circuit SA. Specifically, as shown in FIG. 11, the coupling capacitor Cac is coupled between the output LA out of the linear amplification circuit LA and the first end of the inductor L1. Because the coupling capacitor Cac is introduced, when performing hysteresis control, the hysteresis comparison circuit further needs to refer to a bias voltage Cap DC in representing a difference between voltages at two ends of the coupling capacitor. With reference to FIG. 9, the hysteresis comparison circuit CMP1 is further coupled to the output LA out of the linear amplification circuit LA and the processing circuit 501. The hysteresis comparison circuit CMP1 is further configured to receive the bias voltage Cap DC in provided by the processing circuit 501, where the bias voltage represents the difference between the voltages at the two ends of the coupling capacitor, and the bias voltage may be preconfigured by an engineer in the processing circuit 501 based on a capacitance value of the coupling capacitor Cac and is adjustable. The hysteresis comparison circuit CMP1 is specifically configured to output the first control signal to the mode selection circuit in response to the voltages at the first end and the second end of the inductor L1, the first power supply signal, and the bias voltage.

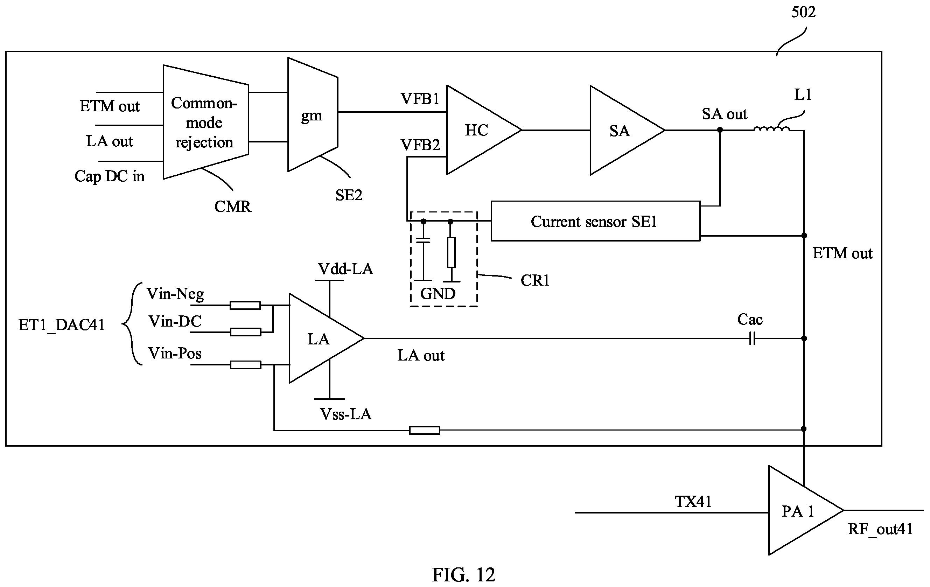

Specifically, as shown in FIG. 12, the power supply circuit 502 further includes: a common-mode rejection circuit CMR and a current conversion circuit SE2, and the hysteresis comparison circuit CMP1 uses a hysteresis comparator. The common-mode rejection circuit CMR is coupled to the first end of the inductor L1, the output LA out of the linear amplification circuit LA, the first end of the inductor L1, and the processing circuit 501. The common-mode rejection circuit CMR is further coupled to an input of the current conversion circuit SE2, and is configured to: perform common-mode rejection processing on the first power supply signal, the voltage at the first end of the inductor L1, and the bias voltage Cap DC in to generate a common-mode rejection voltage, and output the common-mode rejection voltage to the current conversion circuit SE2. An output of the current conversion circuit SE2 is coupled to a non-inverting end (+) of the hysteresis comparator, and the current conversion circuit SE2 is configured to: convert the common-mode rejection voltage to a first feedback voltage VFB1 of a current domain, and output the first feedback voltage VFB1 to the non-inverting end (+) of the hysteresis comparator. An inverting end (-) of the hysteresis comparator is further coupled to the first end of the inductor L1 and the second end of the inductor through a current sensor SE1.

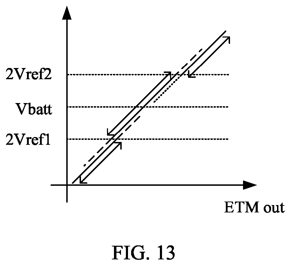

In some examples, an output voltage at the first end of the inductor L1 in the first mode is within a first voltage range, an output voltage at the first end of the inductor L1 in the second mode is within a second voltage range, and an output voltage at the first end of the inductor L1 in the third mode is within a third voltage range. The first voltage range overlaps the second voltage range, a maximum voltage of the first voltage range is within the second voltage range, and a minimum voltage of the second voltage range is within the first voltage range. The second voltage range overlaps the third voltage range, a maximum voltage of the second voltage range is within the third voltage range, and a minimum voltage of the third voltage range is within the second voltage range. With reference to FIG. 13, when the first mode is the buck buck mode, the second mode is the buck-boost buck-boost mode, and the third mode is the boost boost mode, the voltage output by the switch amplification circuit SA in Vsw in the buck-boost buck-boost mode may be a direct current voltage from 0 V (the ground GND) to about 1.5×Vbatt, the direct current voltage output by the switch amplification circuit SA in Vsw in the buck buck mode and the boost boost mode significantly overlaps the voltage range output by the switch amplification circuit SA in Vsw in the buck-boost buck-boost mode. With reference to FIG. 13, a solid line represents an actual direct current output of the SA and a corresponding mode thereof, and a dashed line represents a direct current output voltage level that can be generated by each mode. Significant overlapping between these modes ensures that the SA is always capable of maintaining switching between output voltages in a solid-line interval. With reference to FIG. 13, the first reference level Vrefl and the second reference level Vref2 meet the following relationship: 2×Vref1<Vbatt<2×Vref2. Certainly, this mainly depends on a ratio of the first divided voltage VFB3 to a voltage of ETM out. With reference to FIG. 9, the voltage division circuit CI11 mainly includes a resistor R1 and a resistor R2 that are connected in series between ETM out and GND, and the first divided voltage VFB3 is from a connection point between the resistor R1 and the resistor R2. To maintain stable output of the first divided voltage VFB3, the voltage division circuit C111 usually further includes a capacitor C1 connected in parallel to the resistor R2. For example, when a ratio of the resistor R1 to the resistor R2 is 1:1, if the ratio of the first divided voltage VFB3 to the voltage of ETM out is 1:2, the first reference level Vrefl and the second reference level Vref2 meet the following relationship: 2×Vref1<Vbatt<2×Vref2. In another example, when the ratio of the resistor R1 to the resistor R2 is 2:1, if the ratio of the first divided voltage VFB3 to the voltage of ETM out is 1:3, the first reference level Vrefl and the second reference level Vref2 meet the following relationship: 3×Vref1<Vbatt<3×Vref2.

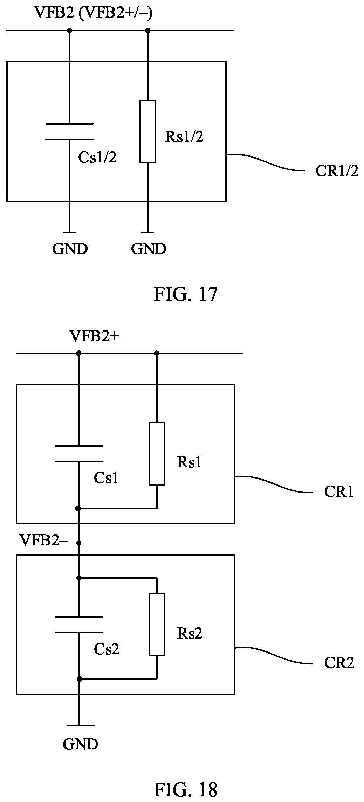

In some examples, as shown in FIG. 9, the hysteresis comparison circuit CMP1 may be implemented through one hysteresis comparator, and as shown in FIG. 8, the hysteresis comparator has a fixed hysteresis band (namely, a hysteresis window Vhyst). One current sensor SE1 and one filter circuit RC1 coupled to the inverting end (-) of the hysteresis comparator are used to detect a current of the inductor L1, and one second feedback voltage VFB2 is output to the inverting end (-) of the hysteresis comparator based on a detection result. In this way, in the ETM, an output current of the switch amplification circuit SA is monitored, and the hysteresis comparator compares the detected first feedback voltage VFB1 with VFB2±Vhyst, to generate the control signal Vsw-ctrl used for the switch amplification circuit SA. Specifically, with reference to FIG. 9 and FIG. 12, a duty cycle of the control signal Vsw-ctrl of the switch amplification circuit SA may be controlled by detecting the difference Vac between the voltages at the two ends of the coupling capacitor Cac. Specifically, the hysteresis comparator is specifically configured to control the duty cycle of Vsw-ctrl by minimizing the output power of the linear amplification circuit LA (because efficiency of the LA is low). In addition, as shown in FIG. 12, a relationship between a voltage V_ETM out at the first end of the inductor L1, a voltage V_LA out at the output of the LA, and voltages V_Cap DC in at the two ends of the coupling capacitor Cac is as follows: V_ETM out=V_LA out+V_Cap DC in. A control objective of the duty cycle of Vsw-ctrl is to make the foregoing equation true. VFB2 may be equivalent to a left component in the equation, namely, V_ETM out, and VFB1 may be equivalent to a right component in the equation, namely, V_LA out+V_Cap DC in. In this way, in the ET mode, VFB1 and VFB2 in FIG. 12 respectively detect the voltage at the first end of the inductor L1 (where the voltage may be converted to a current flowing through the two ends of the inductor L1, and a conversion principle is time integration of the current flowing through the inductor L1) and the difference V_Cap DC between the voltages at the two ends of the coupling capacitor Cac. Based on the foregoing working principle, to enable the switch amplification circuit SA to output as many currents as possible, the output power of the linear amplification circuit LA is minimized. The voltages at the two ends of the coupling capacitor Cac are determined, so that it may be known whether the LA outputs power to the load PA or absorbs power, as shown in FIG. 12. V_Cap DC in=(V_LA out)-(V_ETM out). If V_Cap DC in>0, it means that the LA is outputting power to the load PA, and in this case, the output current of the inductor L1 needs to be increased, that is, the duty cycle of Vsw-ctrl needs to be increased. Conversely, if V_Cap DC in<0, it means that the LA is absorbing the output current of the SA, that is, the output current of the SA is excessively large, and the duty cycle of Vsw-ctrl needs to be decreased. With reference to FIG. 17, the filter circuit CR1 may be formed by one filter capacitor Cs1 and one filter resistor Rs1, and the filter capacitor Cs1 and the filter resistor Rs1 are connected in parallel between the FB2 and the ground GND. The filter circuit CR1 is mainly configured to filter out an interference component of a signal input to the inverting end of the hysteresis comparator, to implement matching between the input signal and hardware of the control circuit. Similarly, one filter circuit may alternatively be disposed at the non-inverting end (+) of the hysteresis comparator.

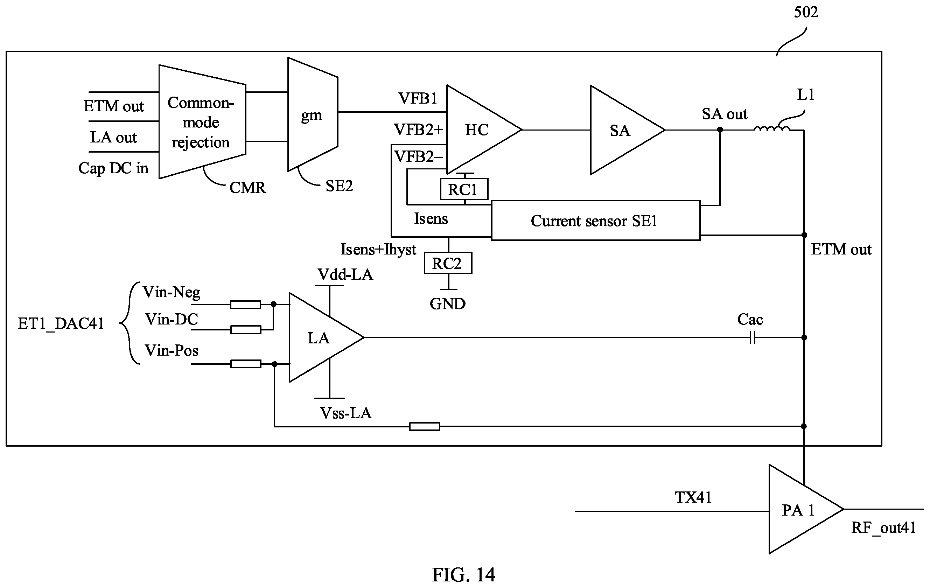

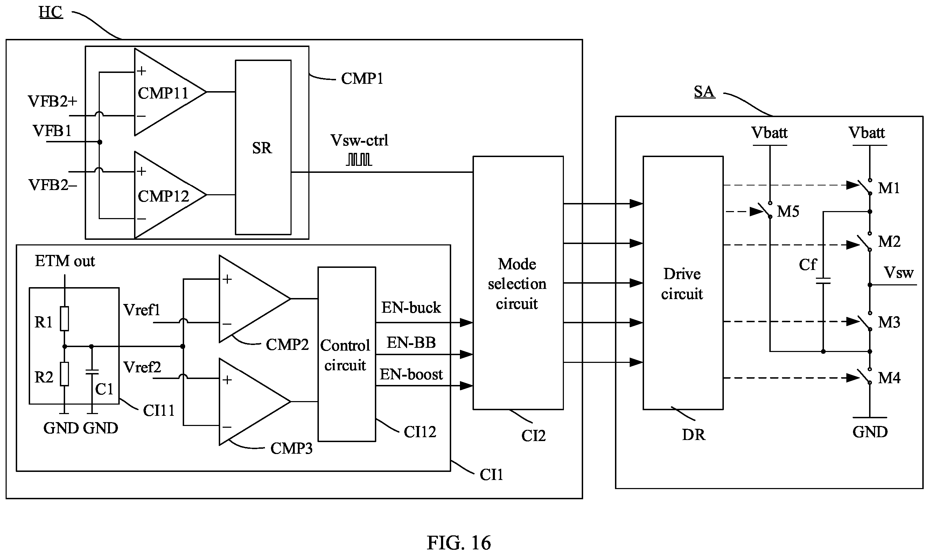

With reference to FIG. 14 and FIG. 16, another manner of constructing a hysteresis comparison circuit CMP1 and a hysteresis band (namely, a hysteresis window) is shown. In this example, the power supply circuit 502 further includes a common-mode rejection circuit CMR and a current conversion circuit SE2, and the hysteresis comparison circuit CMP1 includes a first comparator CMP11, a second comparator CMP12, and a latch SR. The common-mode rejection circuit CMR is coupled to the output LA out of the linear amplification circuit LA, the first end of the inductor L1, and the processing circuit 501. The common-mode rejection circuit CMR is further coupled to an input of the current conversion circuit SE2, and the common-mode rejection circuit CMR is configured to: perform common-mode rejection processing on the first power supply signal, the voltage at the first end of the inductor L1, and the bias voltage Cap DC in to generate a common-mode rejection voltage, and output the common-mode rejection voltage to the current conversion circuit SE2. An output of the current conversion circuit SE2 is coupled to a non-inverting end (+) of the first comparator CMP11 and a non-inverting end (+) of the second comparator CMP12, and is configured to: convert the common-mode rejection voltage to a first feedback voltage VFB1 of a current domain, and output the first feedback voltage VFB1 to the non-inverting end (+) of the first comparator CMP11 and the non-inverting end (+) of the second comparator CMP12. An inverting end (-) of the first comparator CMP11 and an inverting end (-) of the second comparator CMP12 are further coupled to the first end of the inductor L1 and the second end of the inductor through the current sensor SE1. Refer to FIG. 14. The power supply circuit further includes a first filter circuit RC1 and a second filter circuit RC2, the first filter circuit RC1 is coupled to the inverting end (-) of the first comparator CMP11, and the second filter circuit RC2 is coupled to the inverting end (-) of the second comparator CMP12. In the architecture shown in FIG. 14, two sensed currents Isens and Isens+Ihyst are generated through the current sensor SE1, and a small direct current offset (Ihyst) is introduced between the two sensed currents. The sensed currents Isens and Isens+Ihyst respectively flow into the filter circuits RC1 and RC2, to generate feedback voltages VFB2- and VFB2+. The feedback voltages VFB2- and VFB2+ are both proportional to the current of the inductor, but there is a slight bias voltage (caused by Ihyst) between the feedback voltages VFB2- and VFB2+. The feedback voltages VFB2- and VFB2+ are respectively used as an upper limit and a lower limit of the hysteresis band, that is, equivalent to constructing VFB2 in the foregoing example by using the feedback voltages VFB2- and VFB2+, to control the duty cycle of Vsw-ctrl. Specifically, with reference to FIG. 17, the first filter circuit CR1 may be formed by one filter capacitor Cs1 and one filter resistor Rs1, and the filter capacitor Cs1 and the filter resistor Rs1 are connected in parallel between FB2- and the ground GND. The second filter circuit CR2 may be formed by one filter capacitor Cs2 and one filter resistor Rs2, and the filter capacitor Cs2 and the filter resistor Rs2 are connected in parallel between FB2+ and the ground GND. The first filter circuit CR1 and the second filter circuit CR2 are mainly configured to filter out an interference component of a signal input to the hysteresis comparator, to implement matching between the input signal and hardware of the control circuit. Similarly, one filter circuit may alternatively be disposed between the current conversion circuit SE2 and the hysteresis comparison circuit CMP1.

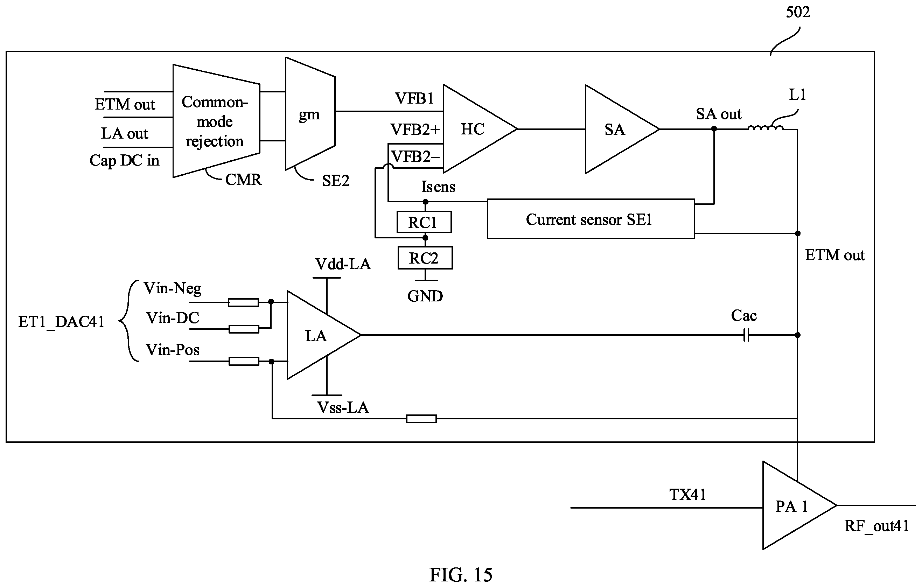

In the solution shown in FIG. 14, there is a very high requirement for accurate matching between the two filter circuits and the sensed currents Isens and Isens+Ihyst. Any mismatching between these elements may result in a significant change in the switching frequency in the switch amplification circuit SA and in some cases, result in a circuit fault. To resolve this problem, an alternative implementation solution is proposed in FIG. 15. In addition, it may be understood that, the hysteresis comparison circuit CMP1 and the hysteresis band (namely, the hysteresis window) construction manner provided in FIG. 14 to FIG. 16 may alternatively be applied to the ETM of the DC coupling architecture, that is, the control circuit HC provided in FIG. 16 may alternatively be applied to the power supply circuit provided in FIG. 8. Because only the control circuit HC provided in FIG. 16 is used to replace the control circuit HC in FIG. 8, for a structure and a connection relationship of the control circuit HC, refer to descriptions in the embodiments corresponding to FIG. 14 and FIG. 16. Therefore, no specific descriptions are provided.

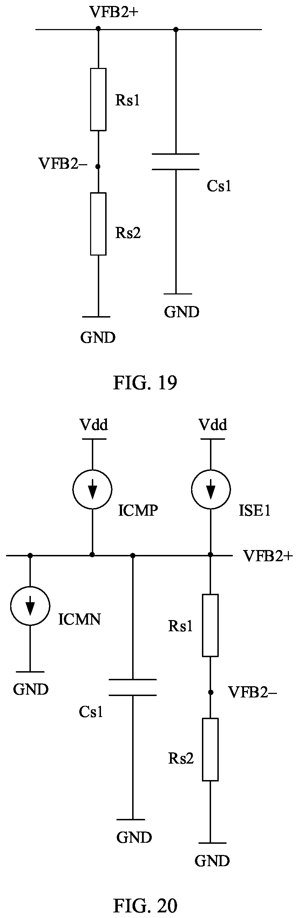

In FIG. 15, the power supply circuit 502 further includes a first filter circuit RC1 and a second filter circuit RC2. A series structure of the first filter circuit RC1 and the second filter circuit RC2 is coupled to the inverting end (-) of the first comparator CMP11, and the second filter circuit RC2 is coupled to the inverting end (-) of the second comparator CMP2. With reference to FIG. 18, the first filter circuit CR1 may be formed by one filter capacitor Cs1 and one filter resistor Rs1, and the filter capacitor Cs1 and the filter resistor Rs1 are connected in parallel between VFB2+ and VFB2-. The second filter circuit CR2 may be formed by one filter capacitor Cs2 and one filter resistor Rs2, and the filter capacitor Cs2 and the filter resistor Rs2 are connected in parallel between VFB2- and the ground GND. In addition, because a voltage division ratio of VFB2+ and VFB2- is mainly determined by voltage division functions of the resistors Rs1 and Rs2, the filter capacitor Cs1 and the filter capacitor Cs2 may also be equivalent to one capacitor CS1. In this way, as shown in FIG. 19, the resistors Rs1 and Rs2 are connected in series between VFB2+ and GND, and the capacitor CS1 is connected in series between VFB2+ and GND, and a connection point between the resistors Rs1 and Rs2 is connected to VFB2-. In this way, two sensed currents Isens are generated through the current sensor SE1. Because the resistor Rs1 and the resistor Rs2 are connected in series, a value of the resistor Rs1 is significantly less than that of the resistor Rs2, and a small voltage is generated on the resistor Rs1. Voltages at two ends of the resistor Rs1 act as an upper limit and a lower limit of the hysteresis band of the hysteresis comparator. Because the resistors Rs1 and Rs2 match each other and are connected in series, a requirement for a component matching degree is loosened in this implementation solution.

In addition, with reference to FIG. 20, if the current sensor SE1 is equivalent to one or more current sources, in addition to a current source ISE1 used to generate a sensed current Isens, two variable current sources ICMP and ICMN may be added in the current sensor SE1 to increase a common-mode tuning range of signals of VFB2+ and VFB2-, the variable current source ICMP is connected between the power supply Vdd and VFB2+, and the variable current source ICMP is connected between the ground GND and the VFB2+. In this way, a common-mode component in VFB2+ and VFB2- may be increased by increasing a current output by the variable current source ICMP or decreasing a current of the variable current source ICMN. The common-mode component is a direct current offset (DC offset) in VFB2+ and VFB2-. Specifically, a size of the hysteresis band of the hysteresis comparator is adjusted by adjusting a size of the common-mode component.

In addition, in some examples, a chip, a chip substrate, and the foregoing power supply circuit disposed on the substrate are further provided.

In the foregoing embodiments, descriptions of embodiment have respective focuses. For a part that is not described in detail in an embodiment, refer to related descriptions in other embodiments.

Although this application is described with reference to specific features and embodiments thereof, it is clear that various modifications and combinations may be made to them without departing from the protection scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A power supply circuit, comprising: a switch amplification circuit, a linear amplification circuit, a control circuit, and an inductor, wherein the control circuit is coupled to the switch amplification circuit, the linear amplification circuit is coupled to a first end of the inductor, the switch amplification circuit is coupled to a second end of the inductor, the first end of the inductor is configured to be coupled to a power amplifier, and the linear amplification circuit is further configured to be coupled to a processing circuit;
the control circuit comprises a mode detection circuit, a mode selection circuit, and a hysteresis comparison circuit;
the mode detection circuit is coupled to the first end of the inductor, the mode selection circuit is coupled to the switch amplification circuit, the hysteresis comparison circuit is coupled to the first end of the inductor and the second end of the inductor, and the mode detection circuit and the hysteresis comparison circuit are further coupled to the mode selection circuit;
the linear amplification circuit is configured to output a first power supply signal based on a first envelope signal output by the processing circuit;
the hysteresis comparison circuit is configured to output a first control signal to the mode selection circuit in response to voltages at the first end and the second end of the inductor;
the mode detection circuit is configured to output a mode selection signal to the mode selection circuit in response to the voltage at the first end of the inductor;
the mode selection circuit is configured to output a plurality of switch control signals to the switch amplification circuit in response to the mode selection signal and the first control signal; and
the switch amplification circuit is configured to:
output, by the switch amplification circuit, a first power supply voltage or a second power supply voltage in a first mode in response to the plurality of switch control signals, wherein the second power supply voltage is greater than the first power supply voltage;
output, by the switch amplification circuit, the first power supply voltage or a third power supply voltage in a second mode in response to the plurality of switch control signals, wherein the third power supply voltage is greater than the second power supply voltage; and
output, by the switch amplification circuit, the second power supply voltage or the third power supply voltage in a third mode in response to the plurality of switch control signals.

2. The power supply circuit according to claim 1, further comprising: a coupling capacitor, wherein the coupling capacitor is coupled between the linear amplification circuit and the first end of the inductor;
the hysteresis comparison circuit is further coupled to the linear amplification circuit and the processing circuit;
the hysteresis comparison circuit is further configured to receive a bias voltage, wherein the bias voltage represents a difference between voltages at two ends of the coupling capacitor; and
that the hysteresis comparison circuit is configured to output the first control signal to the mode selection circuit in response to the voltages at the first end and the second end of the inductor comprises: the hysteresis comparison circuit is configured to output the first control signal to the mode selection circuit in response to the voltages at the first end and the second end of the inductor, the first power supply signal, and the bias voltage.

3. The power supply circuit according to claim 1 or 2, wherein
an output voltage at the first end of the inductor in the first mode is within a first voltage range, an output voltage at the first end of the inductor in the second mode is within a second voltage range, and an output voltage at the first end of the inductor in the third mode is within a third voltage range;
the first voltage range overlaps the second voltage range, a maximum voltage of the first voltage range is within the second voltage range, and a minimum voltage of the second voltage range is within the first voltage range; and
the second voltage range overlaps the third voltage range, a maximum voltage of the second voltage range is within the third voltage range, and a minimum voltage of the third voltage range is within the second voltage range.

4. The power supply circuit according to any one of claims 1 to 3, wherein the first mode comprises a buck BUCK mode, the second mode comprises a buck-boost BUCK-BOOST mode, and the third mode comprises a boost BOOST mode.

5. The power supply circuit according to claim 4, wherein the mode selection circuit is further configured to perform time sequence control on the plurality of switch control signals;
the switch amplification circuit is configured to: in response to the plurality of switch control signals, first switch the first power supply voltage to the second power supply voltage in the second mode, and then switch the second power supply voltage to the third power supply voltage; and
switch the third power supply voltage to the second power supply voltage, and then switch the second power supply voltage to the first power supply voltage.

6. The power supply circuit according to any one of claims 1 to 5, wherein the mode detection circuit comprises a voltage division circuit, a first comparator, a second comparator, and an output circuit;
the voltage division circuit is coupled to the first end of the inductor, the voltage division circuit is further coupled to a non-inverting end of the first comparator and a non-inverting end of the second comparator, the voltage division circuit is configured to output a first divided voltage to the non-inverting end of the first comparator and the non-inverting end of the second comparator, and the first divided voltage is less than the voltage at the first end of the inductor;
an inverting end of the first comparator is coupled to a first reference level end, and the first comparator is configured to: receive a first reference level input by the first reference level end, and output a first comparison result based on the first reference level and the first divided voltage;
an inverting end of the second comparator is coupled to a second reference level end, and the second comparator is configured to: receive a second reference level input by the second reference level end, and output a second comparison result based on the second reference level and the first divided voltage, wherein the first reference level is not equal to the second reference level; and
the output circuit is configured to output the mode selection signal to the mode selection circuit based on the first comparison result and the second comparison result.

7. The power supply circuit according to any one of claims 1 to 6, wherein the power supply circuit further comprises a common-mode rejection circuit and a current conversion circuit, and the hysteresis comparison circuit comprises a hysteresis comparator;
the common-mode rejection circuit is coupled to the first end of the inductor, and the common-mode rejection circuit is further coupled to an input of the current conversion circuit, and is configured to: perform common-mode rejection processing on the voltage at the first end of the inductor to generate a common-mode rejection voltage, and output the common-mode rejection voltage to the current conversion circuit;
an output of the current conversion circuit is coupled to a non-inverting end of the hysteresis comparator, and the current conversion circuit is configured to: convert the common-mode rejection voltage to a first feedback voltage of a current domain, and output the first feedback voltage to the non-inverting end of the hysteresis comparator; and
an inverting end of the hysteresis comparator is further coupled to the first end of the inductor and the second end of the inductor through a current sensor.

8. The power supply circuit according to claim 2, wherein the power supply circuit further comprises a common-mode rejection circuit and a current conversion circuit, and the hysteresis comparison circuit comprises a hysteresis comparator;
the common-mode rejection circuit is coupled to the linear amplification circuit, the first end of the inductor, and the processing circuit, and the common-mode rejection circuit is further coupled to the current conversion circuit, and is configured to: perform common-mode rejection processing on the first power supply signal, the voltage at the first end of the inductor, and the bias voltage to generate a common-mode rejection voltage, and output the common-mode rejection voltage to the current conversion circuit;
the current conversion circuit is further coupled to a non-inverting end of the hysteresis comparator, and the current conversion circuit is configured to: convert the common-mode rejection voltage to a first feedback voltage of a current domain, and output the first feedback voltage to the non-inverting end of the hysteresis comparator; and
an inverting end of the hysteresis comparator is further coupled to the first end of the inductor and the second end of the inductor through a current sensor.

9. The power supply circuit according to claim 7 or 8, wherein the control circuit further comprises a filter circuit coupled to the inverting end of the hysteresis comparator.

10. The power supply circuit according to any one of claims 1 to 9, wherein the power supply circuit further comprises a common-mode rejection circuit and a current conversion circuit, and the hysteresis comparison circuit comprises a first comparator, a second comparator, and a latch;
the common-mode rejection circuit is coupled to the first end of the inductor, the common-mode rejection circuit is further coupled to the current conversion circuit, and the common-mode rejection circuit is configured to: perform common-mode rejection processing on the voltage at the first end of the inductor to generate a common-mode rejection voltage, and output the common-mode rejection voltage to the current conversion circuit;
the current conversion circuit is coupled to a non-inverting end of the first comparator and a non-inverting end of the second comparator, and is configured to: convert the common-mode rejection voltage to a first feedback voltage of a current domain, and output the first feedback voltage to the non-inverting end of the first comparator and the non-inverting end of the second comparator;
an output of the first comparator is coupled to a first input of the latch, and an output of the second comparator is coupled to a second input of the latch;
an output of the latch is coupled to the mode selection circuit; and
an inverting end of the first comparator and an inverting end of the second comparator are further coupled to the first end of the inductor and the second end of the inductor through a current sensor.

11. The power supply circuit according to claim 2, wherein the power supply circuit further comprises a common-mode rejection circuit and a current conversion circuit, and the hysteresis comparison circuit comprises a first comparator, a second comparator, and a latch;
the common-mode rejection circuit is coupled to an output of the linear amplification circuit, the first end of the inductor, and the processing circuit, the common-mode rejection circuit is further coupled to the current conversion circuit, and the common-mode rejection circuit is configured: perform common-mode rejection processing on the first power supply signal, the voltage at the first end of the inductor, and the bias voltage to generate a common-mode rejection voltage, and output the common-mode rejection voltage to the current conversion circuit;
the current conversion circuit is further coupled to a non-inverting end of the first comparator and a non-inverting end of the second comparator, and is configured to: convert the common-mode rejection voltage to a first feedback voltage of a current domain, and output the first feedback voltage to the non-inverting end of the first comparator and the non-inverting end of the second comparator;
an output of the first comparator is coupled to a first input of the latch, and an output of the second comparator is coupled to a second input of the latch;
an output of the latch is coupled to the mode selection circuit; and
an inverting end of the first comparator and an inverting end of the second comparator are further coupled to the first end of the inductor and the second end of the inductor through a current sensor.

12. The power supply circuit according to claim 10 or 11, wherein the control circuit further comprises a first filter circuit and a second filter circuit, the first filter circuit is coupled to the inverting end of the first comparator, and the second filter circuit is coupled to the inverting end of the second comparator.

13. The power supply circuit according to claim 10 or 11, wherein the control circuit further comprises a first filter circuit and a second filter circuit; and
a series structure of the first filter circuit and the second filter circuit is coupled to the inverting end of the first comparator, and the second filter circuit is coupled to the inverting end of the second comparator.

14. A wireless communication system, comprising a processing circuit, a power amplifier, and the power supply circuit according to any one of claims 1 to 13, wherein
the power supply circuit is coupled to the processing circuit and the power amplifier, and the processing circuit is further coupled to the power amplifier.

15. A chip, comprising a substrate, and the power supply circuit, disposed on the substrate, according to any one of claims 1 to 13.
